# EUROPÄISCHE PATENTANMELDUNG

(11) **EP 4 748 569 A1**
(43) Veröffentlichungstag der Anmeldung: **27.05.2026**
(21) Anmeldenummer: 24215589.3
(22) Anmeldetag: 26.11.2024
(51) Int. Cl.: B32B 27/20, E04F 15/10

(54) **TRÄGERPLATTE FÜR EIN DEKORPANEEL UND DEKORPANEEL AUFWEISEND EINE SOLCHE TRÄGERPLATTE, SOWIE VERFAHREN ZUR HERSTELLUNG EINER TRÄGERPLATTE**

(71) Anmelder: Akzenta Paneele + Profile GmbH, 56759 Kaisersesch (DE)
(72) Erfinder: HÜLLENKREMER, Felix, 56076 Koblenz (DE); HANNIG, Hans-Jürgen, 51427 Bergisch Gladbach (DE)
(74) Vertreter: Michalski Hüttermann & Partner Patentanwälte mbB

(57) **Zusammenfassung**

Die vorliegende Erfindung betrifft eine Trägerplatte für ein Dekorpaneel sowie ein Dekorpaneel aufweisend eine solche Trägerplatte. Die erfindungsgemäße Trägerplatte basiert auf einer mineralgefüllten Polymermatrix auf der Grundlage von thermoplastischen Elastomeren, insbesondere Polyolefin-Elastomeren (POE), insbesondere auf Basis von Polypropylen (PP), Polyethylen (PE), Ethylen-Propylen-Dien-Kautschuk (EPDM), sowie Copolymeren dieser untereinander und/oder mit weiteren Polymeren, und Mischungen der zuvor genannten Polymere und Copolymere. Insbesondere betrifft die Erfindung dabei solche Trägerplatten für Dekorpaneele, die eine Stärke ≤ 4,5 mm, insbesondere ≤ 4,0 mm aufweisen und im Wesentlichen flexibel sind.

## Beschreibung

Die vorliegende Erfindung betrifft eine Trägerplatte für ein Dekorpaneel sowie ein Dekorpaneel aufweisend eine solche Trägerplatte. Die erfindungsgemäße Trägerplatte basiert auf einer mineralgefüllten Polymermatrix auf Grundlage von thermoplastischen Elastomeren, insbesondere Polyolefin Elastomeren (POE), insbesondere auf Basis von Polypropylen (PP), Polyethylen (PE), Ethylen-Propylen-Dien-Kautschuk (EPDM), sowie Copolymeren dieser untereinander und/oder mit weiteren Polymeren, und Mischung der zuvor genannten Polymere und Copolymere. Insbesondere betrifft die Erfindung dabei Trägerplatten für Dekorpaneele wobei die Trägerplatten eine Stärke ≤ 4,5mm, insbesondere ≤ 4,0mm aufweisen und im Wesentlichen flexibel sind.

Dekorpaneele sind an sich bekannt und diese werden beispielsweise im Innenausbau als Boden oder Wandbelag genutzt. Unter dem Begriff Wandpaneel sind dabei auch Paneele zu verstehen, welche zur Deckenbekleidung geeignet sind. Die Paneele bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist. Auch die Deckschicht und die übrigen Schichten werden meist aus Harz hergestellt.

Der Träger bzw. der Kern eines entsprechenden Dekorpaneel wird in der Regel als Trägerplatte bereitgestellt, auf welche zur Herstellung eines entsprechenden Dekorpaneels weitere funktionale Lagen an- bzw. aufgebracht sind. Solche funktionalen Lagen umfassen in der Regel eine Dekorschicht und ggf. eine auf der der Dekorschicht gegenüberliegenden Seite des Trägers vorgesehene Gegenzuglage. Darüber hinaus können weitere funktionale Schichten, wie beispielsweise Verschleißschutzschichten vorgesehen sein.

Dekorpaneel auf Kunststoffbasis sind sowohl als sogenannte Rigid-Boards, als auch als sogenannte Dryback oder Loose-Lay Beläge bekannt. Dryback-Fußbodenbeläge sind eine Unterart von Kunststoffbodenbelägen, die als dünne, flexible Dielen oder Fliesen gefertigt werden und direkt auf den Unterboden oder eine vorbereitete, nivellierte Oberfläche verklebt werden. Diese Art von Bodenbelag wird daher oft auch als Klebevinyl bezeichnet, da es fest mit dem Untergrund verklebt wird. Die Klebeinstallation erfordert einen speziellen Kleber, um dauerhaft auf dem Unterboden fixiert zu werden. Der Begriff "Dryback" bezieht sich darauf, dass der Kleber vollständig trocknet und der Bodenbelag somit fest und stabil haftet. Dryback-Bodenbeläge sind in der Regel dünner als andere Kunststoffbodenbeläge wie beispielsweise LVT (Luxury Vinyl Tiles) oder SPC (Stone-Plastic-Composite) Beläge. Daher erfordern sie einen glatten, ebenen Unterboden für eine optimale Installation. Diese Böden sind robust, pflegeleicht und oft wasserresistent, was sie ideal für stark beanspruchte Bereiche wie Küchen, Flure oder gewerbliche Räume macht. Dryback-Bodebbeläge gibt es in einer Vielzahl von Designs, von Holz- und Steinoptiken bis hin zu modernen Mustern. Sie eignen sich gut für Wohn- und Geschäftsbereiche, da sie langlebig, leicht zu reinigen und in vielen Stilvarianten erhältlich sind.

Loose Lay-Fußbodenbeläge sind eine Unterart von Kunststoffbodenbelägen, die ohne den Einsatz von Klebstoffen verlegt werden. Sie zeichnen sich durch ihre einfache Installation aus, da die entsprechenden Belagselemente wie Dielen oder Fliesen lose auf den Untergrund gelegt werden, anstatt fest verklebt oder verriegelt zu werden. Der Begriff "Loose-Lay" bezieht sich also auf die Verlegemethode. Diese Bodenbeläge haben spezielle Eigenschaften, die sie an Ort und Stelle halten, ohne dass zusätzliche Fixierung erforderlich ist. In der Regel sind sie dicker als Drybacks in Bereichen zwischen 4,0 und 5,0 mm. Die Rückseite der Loose-Lay Dielen oder Fliesen besteht oft aus einem speziellen Material, das für ausreichend Haftung auf dem Untergrund sorgt, damit die Dielen oder Fliesen nicht verrutscht. Loose-Lay Bodenbeläge sind in der Regel relativ schwer, was zusätzlich dazu beiträgt, dass sie stabil und sicher auf dem Unterboden liegen. Da keine Klebstoffe verwendet werden müssen, ist die Verlegung sehreinfach und schnell. Dies ist besonders nützlich bei Renovierungen, wo ein schneller Austausch von Bodenbelägen gewünscht ist. Diese Bodenbeläge lassen sich leicht entfernen und wiederverwenden, ohne dass Rückstände von Klebstoff oder Beschädigungen am Unterboden entstehen. Sie sind besonders daher beliebt in Bereichen, in denen Flexibilität erforderlich ist, wie zum Beispiel in Mietwohnungen oder temporären Geschäftsräumen. Auch bei unebenen Untergründen sind sie vorteilhaft, da sie kleine Unebenheiten oft besser ausgleichen können als verklebte Böden.

Die Trägerplatte eines Dryback- bzw. Loose-Lay-Dekorpaneels wird im Stand der Technik aus einer Mischung von PVC, Weichmachern (Phtalate), Füllstoffen und in einigen Fällen Glasfaserlagen hergestellt, um die notwendige Flexibilität und Formstabilität zu erreichen. Die Flexibilität wird hauptsächlich durch die Verwendung von Weichmachern in der PVC-Mischung und die dünne Materialstärke des Bodenbelags erzielt, was ihn leicht biegbar und anpassungsfähig macht, ohne dass seine Haltbarkeit beeinträchtigt wird.

Ein großer Nachteil der bekannten Dryback- und Loose-Lay-Dekorpaneel ist, dass diese auf Grundlage von PVC (Polyvinylchlorid) hergestellt werden und das sowohl der eingesetzte Kunststoff als auch die dem Kunststoff zum Erreichen der gewünschten mechanischen Eigenschaften, wie insbesondere der gewünschten Flexibilität, zugesetzten Weichmacher ökologisch bedenklich sind. So kann bei der Verbrennung von chlorhaltigen Kunststoffen wie PVC unter anderem der stark ätzende gasförmige Chlorwasserstoff (HCl) entstehen. Ferner entstehen beim Verbrennen auch polychlorierte Dibenzodioxine und Dibenzofurane, sowie giftige polykondensierte Aromate wie Benz(a)-Pyren, Pyren und Chrysen. Die dem PVC häufig als Weichmacher zugesetzten Phthalate wie Diisodecylphthalat (DIDP), Diisonylphthalat (DINP), Di(2-ethylhexyl)phthalat (DEHP), Dibutylphthalat (DBP) oder Benzylbutylphthalat (BBP) stehen darüber hinaus im Verdacht, gesundheitsschädlich und darüber hinaus auch entwicklungstoxisch und reproduktionstoxisch zu sein.

Eine Aufgabe der vorliegenden Erfindung ist es daher, eine Trägerplatte für ein Dekorpaneel, insbesondere ein Dryback- und/oder Loose-Lay-Dekorpaneel, anzugeben, welches die oben genannten Nachteile aus dem Stand er Technik zu überwinden vermag und insbesondere umweltfreundlicher ist und gut Recycling-Eigenschaften aufweist. Eine weitere Aufgabe ist es, ein Dekorpaneel, ein Dryback- und/oder Loose-Lay-Dekorpaneel, anzugeben, welches die oben genannten Nachteile aus dem Stand er Technik zu überwinden vermag und insbesondere umweltfreundlicher ist und gut Recycling-Eigenschaften aufweist. Letztendlich ist es eine weitere Aufgabe der vorliegenden Erfindung, ein verbessertes Verfahren zur Herstellung von Trägerplatten für ein Dryback- und/oder Loose-Lay-Dekorpaneel, anzugeben.

Gelöst wird diese Aufgabe durch eine Trägerplatte gemäß Anspruch 1, durch ein Dekorpaneel gemäß Anspruch 5, sowie ein Verfahren gemäß Anspruch 6.

Die erfindungsgemäße Trägerplatte weist eine Kernlage auf. Die Kernlage weist dabei zumindest ein polymeres Matrixmaterial und ein Feststoffmaterial auf. Bevorzugt kann vorgesehen sein, dass die Kernlage nebem dem polymeren Matrixmaterial einen mineralischen Füllstoff aufweist. Dieser Füllstoff kann in einem Bereich von größer oder gleich 30 Gew.-% bis kleiner oder gleich 90 Gew.-%, bezogen auf das Gesamtgewicht der Kernlage, bevorzugt ≥50 Gew.-% bis ≤80 Gew.-%, vorzugsweise ≥57 Gew.-% bis ≤65 Gew.-%, insbesondere 60 Gew.-% enthalten sein. Bevorzugt ist der Füllstoff dabei mindestens ein mineralischer Füllstoff ausgewählt aus der Gruppe bestehend aus Steinmehl, Schwerspat, BaSO₄, CaCO₃, CaSO₄, Wollastonit, CaSiO₃ und Schichtsilikaten.

Unter Schichtsilikatpulver wird dabei in an sich bekannterweise ein Pulver aus einem Schichtsilikat verstanden. Als Schichtsilikat bezeichnet man bekannterweise Minerale aus der Gruppe der Silikate, deren Silikatanionen üblicherweise in Schichten angeordnet sind. Beispielsweise werden unter Schichtsilikaten Minerale aus der Glimmergruppe, der Chloritgruppe, der Kaolinitgruppe und der Serpentingruppe verstanden.

Somit ist das erste Feststoffmaterial vorteilhafterweise zumindest durch einen Großteil aus dem mineralischen Stoff Schichtsilikat gebildet, wobei dieser Stoff etwa als Pulverform eingesetzt werden kann beziehungsweise in der geschmolzenen Polymermasse in Form von Partikeln vorliegen kann. Grundsätzlich kann das erste Feststoffmaterial aus einem pulverförmigen Feststoff bestehen.

Schichtsilikate bieten den Vorteil, dass sie die Herstellung eines Trägers mit guten mechanischen Eigenschaften erlauben können und sich gleichzeitig durch ihre Schichtstruktur gut zu entsprechenden Pulvern verarbeiten lassen können.

In einer Ausgestaltung der Erfindung kann das Schichtsilikatpulver Talkum umfassen. Unter Talkum wird in an sich bekannterweise ein Magnesiumsilikathydrat verstanden, welches beispielsweise die chemische Summenformel Mg₃[Si₄O₁₀(OH)₂] aufweisen kann. In einer weiteren bevorzugten Ausgestaltung kann das Schichtsilikatpulver zu wenigstens 80 Gew.-%, besonders bevorzugt zu wenigstens 95 Gew.-%, aus Talkum bestehen.

Insbesondere Talkum bietet den Vorteil, dass dies eine besonders schonende Herstellung des Trägers ermöglichen, da es problemlos in dem geschmolzenen Polymermaterial eingebettet werden kann und damit keinen abrasiven Effekt auf verwendete Gerätschaften ausübt.

Ein weiter Füllstoff kann CaCO₃ oder Kreide sein. Unter Kreidepulver wird dabei in an sich bekannterweise ein Pulver aus einer Kreide verstanden. Unter Kreide wird im Sinne der vorliegenden Erfindung ein Kalkstein verstanden. Insbesondere kann Kreide im Wesentlichen aus Calcit bestehen.

Kreide bietet insbesondere den Vorteil, dass sie dem Träger zusätzlich zu den vorteilhaften mechanischen Eigenschaften auch eine helle bis weiße Grundfarbe verleihen kann, wodurch die farbliche Gestaltung des plattenförmigen Trägers als besonders einfach sein kann.

Weiter weist die Trägerplatte in der Kernlage als polymeres Matrixmaterial ≥3 Gew.-% bis ≤ 50 Gew.-%, vorzugsweise ≥4 Gew.-% bis ≤ 20 Gew.-% insbesondere 15 Gew.-% oder 5 Gew.-% eines thermoplastischen Elastomer ausgewählt aus der Gruppe bestehend aus Styrol-Block-Copolymere (SBC), thermoplastische Olefine (TPO), thermoplastischen Vulkanisaten (TPV), thermoplastische Polyester-Elastomere (TPC-ET), thermoplastische Polyurethane (TPU), thermoplastische Polyamide (TPA), thermoplastische Polyetheramid-Elastomere, Polyolefin-Elastomere, insbesondere Polypropylen und/oder Polyethylen, siloxan-modifiziertes Polypropylen und Polyethylen, Cycloolefin-Copolymere, Ethylen-Vinylacetat, Ethylen-Methylacrylat, Ethylen-Butylacrylat, Ethylen-Acrylsäure, Ethylen-Ethylacrylat, Ethylen-Glycidylmethacrylat, Ethylen-Methacrylsäure, Ionomere, Polyvinylacetat (PVA), Ethylen-Vinylmethacrylat, Acrylat-Ethylen-Elastomer, Polyacrylelastomere, Polymethylmethacrylat-Elastomer (PMMA), Acrylkautschuk, Maleinsäureanhydrid-modifiziertes Polyolefin, Glykol-modifiziertes Polyethylenterephthalat (PETG), Polycaprolacton (PCL), sowie Mischungen und Copolymere dieser untereinander sowie Mischungen dieser mit (Poly-)Alkenen und/oder mit α-Olefin Comonomeren wie beispielsweise 1-Hexen, 1-Octen oder 1-Buten. Dabei weist das thermoplastische Elastomer eine Kristallinität X_{C} ≤ 40% und ≥ 10%, gegeben als X_{C} = ΔH/ΔH₀ x 100%, ΔH die Schmelzenthalpie des Polymers ist und ΔH₀ wobei die approximierte Schmelzenthalpie des hundertprozentig kristallinen Polymers, auf.

Weiter weist die Kernlage ≥5 Gew.-% bis ≤ 40 Gew.-%, vorzugsweise ≥10 Gew.-% bis ≤ 30 Gew.-%, insbesondere 15 Gew.- % oder 25 Gew.-% eines zweiten thermoplastischen Elastomer ausgewählt aus der Gruppe bestehend aus Styrol-Block-Copolymere (SBC), thermoplastische Olefine (TPO), thermoplastischen Vulkanisaten (TPV), thermoplastische Polyester-Elastomere (TPC-ET), thermoplastische Polyurethane (TPU), thermoplastische Polyamide (TPA), thermoplastische Polyetheramid-Elastomere, Polyolefin-Elastomere, insbesondere Polypropylen und/oder Polyethylen, siloxan-modifiziertes Polypropylen und Polyethylen, Cycloolefin-Copolymere, Ethylen-Vinylacetat, Ethylen-Methylacrylat, Ethylen-Butylacrylat, Ethylen-Acrylsäure, Ethylen-Ethylacrylat, Ethylen-Glycidylmethacrylat, Ethylen-Methacrylsäure, Ionomere, Polyvinylacetat (PVA), Ethylen-Vinylmethacrylat, Acrylat-Ethylen-Elastomer, Polyacrylelastomere, Polymethylmethacrylat-Elastomer (PMMA), Acrylkautschuk, Maleinsäureanhydrid-modifiziertes Polyolefin, Glykol-modifiziertes Polyethylenterephthalat (PETG), Polycaprolacton (PCL), sowie Mischungen und Copolymere dieser untereinander sowie Mischungen dieser mit (Poly-)Alkenen und/oder mit α-Olefin Comonomeren wie beispielsweise 1-Hexen, 1-Octen oder 1-Buten, wobei das zweite thermoplastische Elastomer mit einer Kristallinität X_{C} ≤ 10%, gegeben als Xc = ΔH/ΔH₀ x 100%, ΔH die Schmelzenthalpie des Polymers ist und ΔH₀ wobei die approximierte Schmelzenthalpie des hundertprozentig kristallinen Polymers ist.

Weiter weist die Kernlage ≥3 Gew.-% bis ≤ 20 Gew.-%, vorzugsweise ≥5 Gew.-% bis ≤ 12 Gew.-%, insbesondere 8 Gew.-% eines mit einem thermoplastischen Dien-Kautschuk modifizierten thermoplastischen Elastomer auf, ausgewählt aus der Gruppe bestehend aus Styrol-Block-Copolymere (SBC), thermoplastische Olefine (TPO), thermoplastischen Vulkanisaten (TPV), thermoplastische Polyester-Elastomere (TPC-ET), thermoplastische Polyurethane (TPU), thermoplastische Polyamide (TPA), thermoplastische Polyetheramid-Elastomere, Polyolefin-Elastomere, insbesondere Polypropylen und/oder Polyethylen, siloxan-modifiziertes Polypropylen und Polyethylen, Cycloolefin-Copolymere, Ethylen-Vinylacetat, Ethylen-Methylacrylat, Ethylen-Butylacrylat, Ethylen-Acrylsäure, Ethylen-Ethylacrylat, Ethylen-Glycidylmethacrylat, Ethylen-Methacrylsäure, Ionomere, Polyvinylacetat (PVA), Ethylen-Vinylmethacrylat, Acrylat-Ethylen-Elastomer, Polyacrylelastomere, Polymethylmethacrylat-Elastomer (PMMA), Acrylkautschuk, Maleinsäureanhydrid-modifiziertes Polyolefin, Glykol-modifiziertes Polyethylenterephthalat (PETG), Polycaprolacton (PCL), sowie Mischungen und Copolymere dieser untereinander sowie Mischungen dieser mit (Poly-)Alkenen und/oder mit α-Olefin Comonomeren wie beispielsweise 1-Hexen, 1-Octen oder 1-Buten, wobei der Dien-Kautschuk-Anteil zwischen ≥25 Gew.-% bis ≤ 35 Gew.-%, insbesondere 30 Gew,-% liegt.

Des Weiteren weist die Kernlage zwischen ≥0,5 Gew.-% bis ≤ 3,5 Gew.-%, insbesondere 2 Gew.-% eines Haftvermittlers auf.

Vorzugsweise kann es sich bei den thermoplastischen Elastomeren zumindest teilweise, bevorzugt im Wesentlichen, um rezyklierte Polymere handeln.

Insbesondere wird die Aufgabe der Erfindung durch eine Trägerplatte für ein Dekorpaneel gelöst, wobei die Trägerplatte eine Kernlage aufweist, wobei die Kernlage aufweist
- ≥55 Gew.-% bis ≤70 Gew.-%, vorzugsweise ≥57 Gew.-% bis ≤65 Gew.-%, insbesondere 60 % mindestens eines mineralischen Füllstoffs ausgewählt aus der Gruppe bestehend aus Steinmehl, Schwerspat, BaSO₄, CaCO₃, CaSO₄, Wollastonit, CaSiO₃, Schichtsilikaten;
- ≥4 Gew.-% bis ≤ 20 Gew.-%, insbesondere 15 Gew.-% oder 5 Gew.-% eines Polypropylen-Copolymer mit einer Kristallinität X_{C} ≤ 40% und ≥ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Copolymers ist;
- ≥10 Gew.-% bis ≤ 30 Gew.-%, insbesondere 15 Gew.- % oder 25 Gew.-% eines Polypropylen-Elastomeren mit einer Kristallinität X_{C} ≤ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Polypropylen-Elastomeren ist;
- ≥5 Gew.-% bis ≤ 12 Gew.-%, insbesondere 8 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew,-%, sowie
- als Haftvermittler zwischen ≥0,5 Gew.-% bis ≤ 3,5 Gew.-%, insbesondere 2 Gew.-% eines Maleinsäureanhydrid gegrafteten Polypropylen (PP-g-MAH).

Gemäß einer bevorzugten Ausgestaltung der Erfindung weist die Trägerplatte eine Gegenzuglage auf. Die Gegenzuglage kann dabei bevorzugt wenigstens aufweisen: zwischen ≥20 Gew.-% bis ≤ 50 Gew.-%, vorzugsweise ≥28 Gew.-% bis ≤ 35 Gew.-%, insbesondere 32 % eines isotaktischen Polypropylens aufweist, wobei das isotaktische Polypropylen vorzugsweise ein rezykliertes Polypropylen-Homopolymer ist. Weiter kann die Gegenzuglage zwischen ≥30 Gew.-% bis ≤ 75 Gew.-%, vorzugsweise ≥40 Gew.-% bis ≤ 55 Gew.-%, insbesondere 48 Gew.-% des Materials der Kernlage aufweisen. Insoweit kann es somit vorgesehen sein, dass die Gegenzuglage ein Material aufweist, aufweisend zwischen ≥55 Gew.-% bis ≤70 Gew.-%, vorzugsweise ≥57 Gew.-% bis ≤65 Gew.-%, insbesondere 60 % mindestens eines mineralischen Füllstoffs ausgewählt aus der Gruppe bestehend aus Steinmehl, Schwerspat, BaSO₄, CaCO₃, CaSO₄, Wollastonit, CaSiO₃, Schichtsilikaten;
zwischen ≥2 Gew.-% bis ≤ 40 Gew.-%, vorzugsweise ≥4 Gew.-% bis ≤ 20 Gew.-%, insbesondere 15 Gew.-% oder 5 Gew.-% eines Polypropylen-Copolymer mit einer Kristallinität X_{C} ≤ 40% und ≥ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Copolymers ist;
zwischen ≥5 Gew.-% bis ≤ 40 Gew.-%, vorzugsweise ≥10 Gew.-% bis ≤ 30 Gew.-%, insbesondere 15 Gew.- % oder 25 Gew.-% eines Polypropylen-Elastomeren mit einer Kristallinität X_{C} ≤ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Polypropylen-Elastomeren ist;
≥2,5 Gew.-% bis ≤ 20 Gew.-%, vorzugsweise ≥5 Gew.-% bis ≤ 12 Gew.-%, insbesondere 8 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew.-%, sowie
als Haftvermittler zwischen ≥0,5 Gew.-% bis ≤ 3,5 Gew.-%, insbesondere 2 Gew.-% eines Maleinsäureanhydrid gegrafteten Polypropylen (PP-g-MAH); und
wobei die Gegenzuglage zusätzlich weiter aufweist ≥10 Gew.-% bis ≤ 30 Gew.-%, vorzugsweise ≥15 Gew.-% bis ≤ 25 Gew.-%, insbesondere 20 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew.-%.

Dies berücksichtigend kann der Füllstoffanteil in der Gegenzuglage in einem Bereich zwischen ≥19,5 Gew.-% bis ≤ 40,5 Gew.-%, vorzugsweise ≥26 Gew.-% bis ≤ 32 Gew.-%, insbesondere 28 Gew.-% beträgt, bezogen auf die Materialzusammensetzung der Gegenzuglage betragen.

Vorteilhafterweise kann durch die erfindungsgemäß vorgesehene Gegenzugschicht erreicht werden, dass diese besonders gut mit der Trägerschicht verbunden wird, so dass der plattenförmige Träger besonders gute mechanische Eigenschaften aufweist. Ferner kann dadurch erreicht werden, dass der plattenförmige Träger besonders gut verklebt werden kann. Insbesondere lässt sich für derartige plattenförmige Träger eine besonders gute Haftung für übliche Klebstoffe, wie beispielsweise silanmodifizierte Polymerklebstoffe (SMP) oder polyurethanbasierte Klebstoffe (PU), erreichen.

Gemäß einer bevorzugten Ausgestaltung kann vorgesehen sein, dass die Trägerplatte eine Druckempfangsschicht aufweist, welche als Untergrund für die Aufbringung eines Dekors auf die Trägerplatte, insbesondere mittels eines Digitaldruckverfahrens, dienen kann. Die Druckempfangsschicht weist dabei vorzugsweise ein Vinyl-Copolymer auf, wobei das Vinyl-Copolymer bevorzugt ein Vinyl-Copolymer ausgewählt aus der Gruppe bestehend aus einem propylenbasiertem Vinyl-Copolymer, einem Vinyl-Terpolymer und Mischungen davon ist, besonders bevorzugt ausgewählt aus der Gruppe bestehend aus einem Propylen-Ethylen-Random-Copolymer, einem Polypropylen-Ethylen-Butylen-Copolymer, einem Ethylen-Propylen-Dien-Monomer Kautschuk und Mischungen davon.

Dadurch kann auch erreicht werden, dass die Trägerplatte besonders einfach mit weiteren Schichten versehen werden kann. Insbesondere kann dadurch erreicht werden, dass die Oberfläche des plattenförmigen Trägers besonders gute Siegeleigenschaften aufweist. Beispielsweise kann dadurch erreicht werden, dass die Oberfläche des plattenförmigen Trägers einen Schmelzpunkt aufweist, der oberhalb einer notwendigen Siegeltemperatur liegt. Zudem kann dadurch erreicht werden, dass die siegelfähige Schicht sich gut mit der Trägerschicht verbindet und der plattenförmige Träger insgesamt gute mechanische Eigenschaften aufweist.

Bevorzugt kann vorgesehen sein, dass das Vinyl-Copolymer der Druckempfangsschicht eine Mischung aufweisend Propylen-Ethylen-Random-Copolymer und Polypropylen-Ethylen-Butylen-Copolymer umfasst.

Bevorzugt kann vorgesehen sein, dass das Vinyl-Copolymer der Druckempfangsschicht einen Schmelzpunkt gemessen nach ISO 11357-3 aufweist in einem Bereich von größer oder gleich 110 °C bis kleiner oder gleich 160 °C, bevorzugt größer oder gleich von 120 °C bis kleiner oder gleich 150 °C, besonders bevorzugt größer oder gleich 130° C bis kleiner oder gleich 140 °C.

Bevorzugt kann vorgesehen sein, dass das Vinyl-Copolymer der Druckempfangsschicht eine Vicat Erweichungstemperatur (A50) gemessen nach ISO 306 aufweist in einem Bereich von größer oder gleich 100 °C bis kleiner oder gleich 120°C, bevorzugt größer oder gleich 105 °C bis kleiner oder gleich 115 °C.

Bevorzugt kann vorgesehen sein, dass das Vinyl-Copolymer der Druckempfangsschicht eine Schmelzflussrate gemessen nach ISO 1133-1 (230 °C/2,16 kg) aufweist in einem Bereich von größer oder gleich 5 g/10 min bis kleiner oder gleich 7 g/10 min, besonders bevorzugt 5,5 g/10 min bis kleiner oder gleich 6 g/10 min.

Bevorzugt kann vorgesehen sein, dass das Vinyl-Copolymer der Druckempfangsschicht eine Siegelinitiationstemperatur aufweist in einem Bereich von größer oder gleich 75 °C bis kleiner oder gleich 125 °C, bevorzugt größer oder gleich 80 °C bis kleiner oder gleich 115 °C, besonders bevorzugt größer oder gleich 85 °C bis kleiner oder gleich 100 °C.

Unter Siegelinitiationstemperatur wird im Sinne der vorliegenden Anmeldung die minimale Temperatur verstanden, bei der das Vinyl-Copolymer der Druckempfangsschicht mit einem Träger versiegelt werden kann.

Bevorzugt kann vorgesehen sein, dass das die Siegelinitiationstemperatur des dritten Vinyl-Copolymers zumindest 10 °C kleiner ist als die Schmelztemperatur des dritten Vinyl-Copolymers, bevorzugt zumindest 20 °C kleiner, besonders bevorzugt zumindest 25 °C kleiner.

Durch die vorbeschriebenen Parameter kann erreicht werden, dass die siegelfähige Schicht gut mit einer Folie versiegelt werden kann, ohne dass die siegelfähige Schicht schmilz und/oder der plattenförmige Träger sich verformt.

Bevorzugt kann vorgesehen sein, dass das Propylen-Ethylen-Random-Copolymer einen Ethylengehalt aufweist in einem Bereich von größer oder gleich 1 Gew.-% bis kleiner oder gleich 16 Gew.-%, bevorzugt 1 Gew.-% bis kleiner oder gleich 10 Gew.-%, bezogen auf das Propylen-Ethylen-Random-Copolymer, weiter bevorzugt größer oder gleich 2 Gew.-% bis kleiner oder gleich 6 Gew.-%, beispielsweise 4 Gew.-%.

Bevorzugt kann vorgesehen sein, dass das Propylen-Ethylen-Random-Copolymer eine Vicat Erweichungstemperatur (A50) gemessen nach ISO 306 aufweist in einem Bereich von größer oder gleich 90 °C bis kleiner oder gleich 120°C, bevorzugt größer oder gleich 100 °C bis kleiner oder gleich 110 °C.

Bevorzugt kann vorgesehen sein, dass das Polypropylen-Ethylen-Butylen-Copolymer einen Schmelzpunkt gemessen nach ISO 11357-3 aufweist in einem Bereich von größer oder gleich 110 °C bis kleiner oder gleich 150 °C, bevorzugt größer oder gleich 120 °C bis kleiner oder gleich 130°C.

Bevorzugt kann vorgesehen sein, dass das Polypropylen-Ethylen-Butylen-Copolymer eine Vicat Erweichungstemperatur (A50) gemessen nach ISO 306 aufweist in einem Bereich von größer oder gleich 80 °C bis kleiner oder gleich 110°C, bevorzugt größer oder gleich 90 °C bis kleiner oder gleich 100 °C.

Bevorzugt kann vorgesehen sein, dass die Schmelzflussraten MFR (230 °C, 2,16 kg) des Polymeranteils der Kernlage und des Vinyl-Copolymers der Druckempfangsschicht gemessen nach EN ISO 1133-1, einen Differenzbetrag zueinander aufweisen von kleiner oder gleich 3 g/10 min, bevorzugt kleiner oder gleich 2 g/10 min, besonders bevorzugt kleiner oder gleich 1 g/10 min.

Bevorzugt kann vorgesehen sein, dass die Druckempfangsschicht das Vinyl-Copolymer der Druckempfangsschicht aufweist in einem Bereich von größer oder gleich 50 Gew.-% bis kleiner oder gleich 100 Gew.-%, bezogen auf das Gewicht des Vinyl-Copolymers der Druckempfangsschicht, bevorzugt größer oder gleich 55 bis kleiner oder gleich 80 Gew.-%, mehr bevorzugt größer oder gleich 55 Gew.-% bis kleiner oder gleich 70 Gew.-%, besonders bevorzugt größer oder gleich 60 Gew.-% bis kleiner oder gleich 65 Gew.-%.

Bevorzugt kann vorgesehen sein, dass die Druckempfangsschicht ein Vinyl-Alkylacrylat-Copolymer aufweist, bevorzugt ein Vinyl-Butylacrylat-Copolymer, besonders bevorzugt ein Ethylen-Butylacrylat.

Bevorzugt kann vorgesehen sein, dass die Druckempfangsschicht Ethylen-alpha Olefin Copolymer bzw. Propylen-alpha Olefin Copolymer (PP/PE Plastomer) aufweist mit geringer Taktizität. Das Ethylen-alpha Olefin Copolymer bzw. Propylen-alpha Olefin Copolymer (PP/PE Plastomer) kann dabei gemäß einer Ausgestaltung der Erfindung in dem Vinyl-Copolymers der Druckempfangsschicht in einem Bereich von größer oder gleich 0 Gew.-% bis kleiner oder gleich 50.-Gew.-%, bezogen auf das Gewicht des Vinyl-Copolymers der Druckempfangsschicht, bevorzugt größer oder gleich 10 Gew.-% bis kleiner oder gleich 40 Gew.-%, besonders bevorzugt größer oder gleich 15 Gew.-% bis kleiner oder gleich 30 Gew.-% enthalten sein.

Bevorzugt kann vorgesehen sein, dass die Druckempfangsschicht das Vinyl-Alkylacrylat-Copolymer aufweist in einem Bereich von größer oder gleich 0 Gew.-% bis kleiner oder gleich 50.-Gew.-%, bezogen auf das Gewicht des Vinyl-Copolymers der Druckempfangsschicht, bevorzugt größer oder gleich 10 Gew.-% bis kleiner oder gleich 40 Gew.-%, besonders bevorzugt größer oder gleich 15 Gew.-% bis kleiner oder gleich 30 Gew.-%.

Bevorzugt kann vorgesehen sein, dass die Druckempfangsschicht einen Masterbatch umfasst, bevorzugt einen vinylpolymerbasierten Masterbatch, besonders bevorzugt einen LDPEbasierten Masterbatch, wobei der Masterbatch vorzugsweise weißes Pigment umfasst, bevorzugt Titandioxid.

Dadurch kann vorteilhafterweise erreicht werden, dass die siegelfähige Schicht zugleich als Dekoruntergrund genutzt werden kann. Somit kann erreicht werden, dass ein auf den plattenförmigen Träger aufgebrachtes Dekor besonders gut zur Geltung kommt.

Bevorzugt kann vorgesehen sein, dass die Druckempfangsschicht den Masterbatch aufweist in einem Bereich von größer oder gleich 0 Gew.-% bis kleiner oder gleich 10 Gew.-%, bezogen auf das Gewicht der zweiten Polymermasse, bevorzugt größer 2,5 Gew.-% bis kleiner 7,5 Gew.-%, beispielsweise 5 Gew.-%.

Bevorzugt kann vorgesehen sein, dass die Druckempfangsschicht ein zweites Feststoffmaterial aufweist, wobei das zweite Feststoffmaterial bevorzugt ausgewählt ist aus der Gruppe bestehend aus Calciumcarbonat und Kaolin.

Bevorzugt kann vorgesehen sein, dass die Druckempfangsschicht das zweite Feststoffmaterial aufweist in einem Bereich von größer oder gleich 0 Gew.-% bis kleiner oder gleich 50 Gew.-%, bezogen auf das Gewicht der zweiten Polymermasse, bevorzugt größer oder gleich 5 Gew.-% bis kleiner oder gleich 45 Gew.-%, mehr bevorzugt größer oder gleich 15 Gew.-% bis kleiner oder gleich 40 Gew.-%, besonders bevorzugt größer oder gleich 25 Gew.-% bis kleiner oder gleich 35 Gew.-%.

Bevorzugt kann vorgesehen sein, dass die Druckempfangsschicht bezogen auf das Gesamtgewicht der Druckempfangsschicht aufweist, das Vinyl-Copolymer der Druckempfangsschicht in einem Bereich von größer oder gleich 50 Gew.-% bis kleiner oder gleich 100 Gew.-%, das Vinyl-Alkylacrylat-Copolymer in einem Bereich von größer oder gleich 0 Gew.-% bis kleiner oder gleich 5
0.-Gew.-%, den Masterbatch aufweist in einem Bereich von größer oder gleich 0 Gew.-% bis kleiner oder gleich 10 Gew.-%, und das zweite Feststoffmaterial in einem Bereich von größer oder gleich 0 Gew.-% bis kleiner oder gleich 50 Gew.-%.

Gemäß einer bevorzugten Ausgestaltung der Erfindung weist die Trägerplatte einen Biege-E-Modul in einem Bereich zwischen ≤ 400 MPa und 2000 MPa, vorzugsweise zwischen ≤ 600 MPa und 1800 MPa, insbesondere zwischen ≤ 800 MPa und 1500 MPa aufweist auf.

Es konnte gezeigt werden, dass sich diese Zusammensetzung besonders eignet, da sich die somit erhaltenen plattenförmigen Träger besonders gut mit Dekoren versehen lassen können.

Darüber hinaus wird mit der Erfindung ein Dekorpaneel vorgeschlagen, welche eine wie zuvor beschriebene Trägerplatte aufweist. Neben den zuvor beschriebenen Lagen der Trägerplatte, umfassend die Kernlage und eine Druckempfangsschicht, sowie optionale eine Gegenzuglage umfasst das erfindungsgemäße Dekorpaneel eine Dekorschicht, welche mittels Druckes auf die Druckempfangsschicht aufgebracht wurde.

Gemäß einer bevorzugten Ausgestaltung der erfolgt der Druck mittels eines Digitaldruckverfahrens, insbesondere mittels eines Inkjet-Verfahrens. Besonders bevorzugt erfolgt der Digitaldruck dabei unter Verwendung einer Strahlungshärtbaren Tintenzusammensetzung.

Gemäß einer weiteren Ausgestaltung kann es vorgesehen sein, dass oberhalb der Dekorschicht eine Verschleißschutzschicht vorgesehen ist. Diese Verschleißschutzschicht kann durch eine Lackschicht und/oder durch eine Folienschicht gebildet sein. Insbesondere kann es vorgesehen sein, dass eine Verschließschutzfolie mittels eines Lackes, vorzugsweise eines Strahlungshärtbaren Lackes, auf die Dekorschicht aufgeklebt wird.

Alternativ kann es vorgesehen sein, dass zur Ausbildung einer Verschließschutzschicht ein Lackauftrag erfolgt. Vorzugsweise kann es dabei vorgesehen sein, dass ein strahlungshärtbarer Lack, insbesondere ein UV-härtbarer Lack aufgetragen wird. Dabei kann der Lackauftrag auch mehrschichtig erfolgen, wobei insbesondere unterschiedliche Lackzusammensetzungen nacheinander aufgetragen werden. Dabei kann der mehrfache Auftrag insbesondere unter Durchführung einer Teilhärtung der zuvor aufgetragenen Lackschichten und einer abschließenden gemeinsamen Endhärtung erfolgen.

Darüber hinaus wird mit der Erfindung ein Verfahren zur Herstellung einer Trägerplatte für ein Dekorpaneel vorgeschlagen, wobei die Trägerplatte eine Kernlage und eine Gegenzuglage aufweist. Dabei weist das Verfahren die nachfolgenden Verfahrensschritte:
a) Bereitstellen einer Polymermasse für eine Kernlage sowie einer Polymermasse für eine Gegenzuglage;
b) Schmelzen der Polymermassen
c) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
d) Austreiben der schichtweise übereinandergelegten geschmolzenen Polymermassen durch eine Düse;
e) Kalibrieren der schichtweise übereinandergelegten geschmolzenen Polymermassen unter Ausbildung eines plattenförmigen Trägers aufweisend zumindest
eine Trägerschicht umfassend die Polymermasse der Kernlage und die Polymermasse des Gegenzuglage, wobei während der Kalibrierung die Polymermassen über eine Kalibiereinrichtung gekühlt werden, wobei die Kalibiereinrichtung zumindest eine erste Kalibrierwalze und einer zweite Kalibrierwalze aufweist und die übereinandergelegten Polymermassen durch einen zwischen der ersten Kalibierwalze und der zweiten Kalibierwalze ausgebildeten Kalibierspalt geführt wird, wobei die erste Kalibierwalze eine Temperatur T1 aufweist und die zweite Kalibrierwalze eine Temperatur T2 aufweist und wobei Δ_{T1/T2} in einem Bereich zwischen ≥20K und ≤ 100K, vorzugsweise ≥25K und ≤ 70K, insbesondere 50K beträgt.

Es hat sich überraschenderweise gezeigt, dass der so erreichte stärkere Schrumpf der Rezeptur der Gegenzuglage gegenüber einer sonst üblichen gleichmäßigen (symmetrischen) und möglichst langsamen Kühlung, vorteilhaft ist, da ein Schüsseln, mithin ein konvexer Verzug der Trägerplatte vermieden werden kann. Die Eigenspannung ist der Platte ist eingefroren und gibt ihr Potenzial in den Folgeprozessen ab, z.B. bei einem späteren Auftrag einer UV-härtbaren Lackschicht. Durch die dabei erfolgende Wärmeeinwirkung, z.B. durch einen UV-Strahler wird eine die eingefrorene Spannung als Gegenspannung freigesetzt, um die eingeleiteten Kräfte der Oberflächenbeschichtung zu kompensieren.

Gemäß einer bevorzugten Ausgestaltung der Erfindung kann es vorgesehen sein, dass eine weitere Polymermasse zur Ausbildung einer Druckempfangsschicht bereitgestellt wird, welche gemeinsam mit der Polymermasse der Kernlage und der Polymermasse der Gegenzuglage extrudiert wird, so dass sich ein plattenförmiger Träger mit dem Schichtaufbau Druckemfangsschicht/Kemlage/Gegenzuglage ausbildet.

Im Verfahrensschritt e) erfolgt das Kalibrieren der schichtweise übereinandergelegten geschmolzenen Polymermassen unter Ausbildung eines plattenförmigen Trägers.

Bevorzugt kann vorgesehen sein, dass das Kalibrieren mittels einer Anordnung aus mehreren rotierbaren Walzen erfolgt, wobei die einzelnen Walzen über- oder hintereinander angeordnet sind und jede einzelne Walze mit benachbarten Walzen mindestens einen Kalibrierspalt ausbildet durch welchen die schichtweise übereinandergelegten geschmolzenen Polymermassen geführt werden, wobei die Kalibrierspalt-Höhen über eine horizontale und/oder vertikale Bewegung einzelner Walzen während des Herstellungsprozesses variabel einstellbar sind.

Insbesondere lässt sich über die erfindungsgemäße Integration des Walzen-Kalibrierschritts in die Herstellung der Anteil an Lufteinschlüssen an der Paneel-Oberfläche reduzieren, welches wahrscheinlich auf eine verbesserte Entfernung im Träger vorhandener sowie einem verbesserten Ausschluss von Luft in den Walzenspalten zurückgeführt werden kann. Neben den direkten Prozessvorteilen lassen sich durch das flexible Verfahren unter Einsatz individuell steuerbarer Walzen auch die Rüst- und Einfahrzeiten der Anlage verkürzen, welches in einer höheren Verfahrenseffizienz mündet.

Die Formung und die Kalibrierung der Paneele erfolgt somit nicht durch die Verwendung einer flächigen Presse, sondern durch den Einsatz von Walzen. Durch die durch die Walzenanordnung gebildeten Spalträume zwischen den Walzen werden die schichtweise übereinandergelegten geschmolzenen Polymermassen geführt und aufgrund der mechanischen Belastung in den Walzenspalten wird die Masse gequetscht und auf die gewünschte Dicke gebracht. Neben den auftretenden mechanischen Kräften durch die Walzen können die polymeren Massen gleichzeitig auch gekühlt werden. Dies kann über die Walzen oder mittels anderer Kühlmittel, z.B. durch Anblasen mit Luft, erfolgen. Das sich mittels der Walzenanordnung und mittels der Walzenspalte eine effiziente Kalibrierung erhalten lässt ist überraschend, da die viskoelastischen Eigenschaften der geschmolzenen polymeren Massen eher den Einsatz von Pressen mit großer Oberfläche nahelegen. Die im Vergleich zu den Pressen eher kleine aktive Kalibrieroberfläche in den Walzenspalten sollte eher dazu führen, dass aufgrund der rheologischen Eigenschaften der Polymermasse, wie beispielsweise thixotropen Eigenschaften, sich an kleinen Kalibrieroberflächen nur eine ungenügende Kalibrierung ergibt. Dies ist überraschenderweise aber nicht der Fall, sodass über die Anordnung mehrerer Walzen eine effiziente und zeitsparende Produktion gewährleistet werden kann. Mehrere Walzen in diesem Zusammenhang bedeuten mehr als vier, also beispielsweise fünf Walzen, wobei die mehreren Walzen mindestens 3 oder 4 separate Spalte ausbilden. Bevorzugt sind die Spalte hintereinander, durch die Walzen getrennt, angeordnet. Insbesondere ist es erfindungsgemäß auch vorgesehen, dass die Kalibrierung des Trägers nur über das Führen des geschmolzenen Trägermaterials durch die Walzenspalte erfolgt. Insofern kann es erfindungsgemäß auch vorgesehen sein, dass das Verfahren auf den Einsatz plattenförmiger Presseinrichtungen, wie beispielsweise Bandpressen, gänzlich verzichten kann. Auch kann vorgesehen sein, dass die Kalibrierung der Träger nur durch die hintereinander angeordneten Walzen direkt aufeinanderfolgend an einem Ort der Vorrichtung erfolgt. Eine Aufteilung der Walzenanordnung, beispielsweise erst zwei Walzenspalte, gefolgt von beispielsweise einer Kühlstrecke und dann wieder ein oder zwei Walzenspalte, wäre in diesem Fall nicht erfindungsgemäß. Erfindungsgemäß kann weiter vorgesehen sein, dass die Kalibrierung direkt nach der Extrusion des Trägermaterials erfolgt und weitere signifikante Kalibrations- oder Glättungsschritte entfallen.

Die Kalibrierspalt-Höhen sind über eine horizontale oder vertikale Bewegung einzelner Walzen während des Herstellungsprozesses variabel einstellbar. Dies bedeutet, dass sich über eine Änderung der Position einer einzelnen Walze, sich auch die Spaltdimensionen desjenigen oder derjenigen Spalte ändern, welche zu benachbarten Walzen ausgebildet werden. So lassen sich die Spaltdimensionen und damit die Trägerhöhe über den Abstand der Walzen zueinander beeinflussen. Auch kann über die relative Höhe der einzelnen Walzen zueinander der Abzugs-oder Auftreffwinkel des geschmolzenen Polymermaterials auf die Walze geändert werden, welches unterschiedliche mechanische Kräfte, ggf. unterschiedliche Kühleigenschaften und - Flächen, sowie mögliche Lufteinschlüsse zwischen der Walze und dem Polymer nach sich zieht. Eine Walze ist während des Herstellungsprozesses variabel einstellbar, wenn die Walze während des Durchlaufens des polymeren Materials ihre X- und/oder Y-Position verändern kann. Die einzelnen Spalte können im Rahmen der Herstellung entweder isobar oder isochor gesteuert werden. Erstere Fahrweise gibt eine mechanische Kraft auf das polymere Trägermaterial im Walzenspalt vor, wohingegen letztere Fahrweise auf eine konstante Dicke des Spaltes zwischen zwei Walzen abstellt. In ersterer Fahrweise werden also die Walzenpositionen dynamisch angepasst, wohingegen bei letzterer die Walzenpositionen eher konstant zueinander gehalten werden.

Besonders vorteilhaft ist, wenn zwischen mehreren oder sämtlichen Walzen unterschiedliche Kalibrierspalte eingestellt werden können. Damit kann den während der Produktion auftretenden Schwankungen in der Trägerstärke und eventuell einer nicht ganz homogenen Kühlleistung der einzelnen Walzen entgegengewirkt werden. Jede der Walzen kann einfach nur "mitlaufen" oder die Förderung der Platte unterstützen, weshalb auch vorgesehen sein kann, dass die Walzen einzeln oder zusammen antreibbar sind. Je nach Walzenpositionierung kann das Trägermaterial die Walzen quasi in einer Wellenlinie durchlaufen und kommt somit einmal mit der einen und einmal mit der anderen Seite aufeinanderfolgender Walzen in Kontakt. Damit der Einfluss der Berührungsflächen zwischen Walze und Trägeroberfläche für beide Trägerseiten weitgehend gleich ist, kann vorgesehen sein, dass der Durchmesser der Hauptwalzen und der nachgeschalteten Walzen so gewählt ist, dass die Berührungsflächen zwischen Träger und Walzen auf beiden Seiten des Trägers weitgehend gleich sind. Beim Umschlingen einer jeweiligen Walze kann immer nur eine Extrudatseite gekühlt werden.

Erfindungsgemäß ist es dabei vorgesehen, dass der Temperaturunterschied in der Abkühlung der Kernlage/Druckempfangsschicht gegenüber der Abkühlung der Gegenzuglage zwischen ≥ 20K und ≤ 100K, vorzugsweise ≥ 25K und ≤ 70K, insbesondere 50K beträgt, wobei die Gegenzuglage stärker abgekühlt wird, mithin die Kalibrierwalze bzw. die Kalibrierwalzen mit der niedrigeren Temperatur kontaktieren, damit sich der gewünschte Temperaturunterschied einstellt.

Die Erfindung wird nachfolgend anhand von Ausführungsbeispielen weiter erläutert.

In einer Ausgestaltung der Erfindung für eine Trägerplatte für ein Dekorpaneel, welches als Dryback-Paneel mit einer Dicke von beispielsweise 2 mm verlegt werden kann, weist die Trägerplatte die nachfolgende Zusammensetzung auf

Kernlage, wobei die Kernlage zwischen ≥80 Gew.-% und ≤97 Gew.-% der Gesamtmasse der Trägerplatte ausmacht:
- ≥50 Gew.-% bis ≤67 % Gew.-% mineralischer Füllstoffen, vorzugsweise aufweisend wenigstens ein Schichtsilikat;
- ≥10 Gew.-% bis ≤20 Gew.-% eines isotaktischen Polypropylen-Copolymer mit einer Kristallinität X_{C} ≤ 38 % und ≥ 15%,
- ≥10 Gew.-% bis ≤20 Gew.-% eines ataktischen und amorphen Polypropylen-Elastomeren mit einer Kristallinität X_{C} ≤ 5 % und ≥ 0%,
- ≥5 Gew.-% bis ≤14 Gew.-% eines ataktisch und amorph Polypropylen mit einem EPDM-Anteil von ≥20 Gew.-% bis ≤40 Gew.-%)
- ≥0,5 Gew.-% bis ≤4 Gew.-% eines Haftvermittlers
- optional primäre und sekundäre Stabilisierungsmittel und Antioxidationsmittel wie beispielsweise hindered Phenols ausgewählt aus der Gruppe bestehend aus Butylierte Hydroxytoluole (BHT), butylierte Hydroxyanisole (BHA), Tetrakis[methylene(3,5-di-tert-butyl-4-hydroxyphenyl)]methan oder Octadecyl-3-(3,5-di-tert-butyl-4-hydroxyphenyl) acrylate, Phosphiten und Thioethern.

Eine optional vorzusehende Gegenzuglage kann die nachfolgende Zusammensetzung aufweisen, wobei die Gegenzuglage zwischen 4 Gew.-% und 12 Gew.-% der Gesamtmasse der Trägerplatte ausmachen kann:
- zwischen 20 Gew.-% und 45 Gew.-% eines isotaktischen Polypropylen mit einer Kristallinität X_{C} ≤ 40 % und ≥ 10%, vorzugsweise als ein Rezyklat. Vorzugsweise liegt das Polypropylen dabei als Homopolymer vor;
- zwischen 30 Gew.-% und 60 Gew.-% eines Materials mit der Zusammensetzung der Kernlage;
- ≥10 Gew.-% bis ≤30 Gew.-% eines ataktisch und amorph Polypropylen mit einem EPDM-Anteil von ≥20 Gew.-% bis ≤40 Gew.-%;
- optional primäre und sekundäre Stabilisierungsmittel und Antioxidationsmittel wie beispielsweise hindered Phenols ausgewählt aus der Gruppe bestehend aus Butylierte Hydroxytoluole (BHT), butylierte Hydroxyanisole (BHA), Tetrakis[methylene(3,5-di-tert-butyl-4-hydroxyphenyl)]methan oder Octadecyl-3-(3,5-di-tert-butyl-4-hydroxyphenyl) acrylate, Phosphiten und Thioethern.

Eine solche Trägerplatte weist einen Biege-E-Modul von zwischen ≤ 1000 MPa und 2000 MPa, insbesondere zwischen ≤ 1200 MPa und 1800 MPa, wie beispielsweise 1500 MPa auf.

In einer Ausgestaltung der Erfindung für eine Trägerplatte für ein Dekorpaneel, welches als Loose-Lay-Paneel ohne Verkleben mit einer Dicke von beispielsweise 4mm verlegt werden kann, weist die Trägerplatte die nachfolgende Zusammensetzung auf:
- ≥50 Gew.-% bis ≤67 % Gew.-% mineralischer Füllstoffen, vorzugsweise aufweisend wenigstens ein Schichtsilikat;
- ≥2 Gew.-% bis ≤10 Gew.-% eines isotaktischen Polypropylen-Copolymer mit einer Kristallinität X_{C} ≤ 39 % und ≥ 13%,
- ≥15 Gew.-% bis ≤40 Gew.-% eines ataktischen und amorphen Polypropylen-Elastomeren mit einer Kristallinität X_{C} ≤ 4 % und ≥ 0%,
- ≥5 Gew.-% bis ≤14 Gew.-% eines ataktisch und amorph Polypropylen mit einem EPDM-Anteil von ≥20 Gew.-% bis ≤40 Gew.-%)
- ≥0,5 Gew.-% bis ≤4 Gew.-% eines Haftvermittlers
- optional primäre und sekundäre Stabilisierungsmittel und Antioxidationsmittel wie beispielsweise hindered Phenols ausgewählt aus der Gruppe bestehend aus Butylierte Hydroxytoluole (BHT), butylierte Hydroxyanisole (BHA), Tetrakis[methylene(3,5-di-tert-butyl-4-hydroxyphenyl)]methan oder Octadecyl-3-(3,5-di-tert-butyl-4-hydroxyphenyl) acrylate, Phosphiten und Thioethern.

Auch hier kann eine Gegenzuglage optional vorgesehen sein, die die nachfolgende Zusammensetzung aufweisen, wobei die Gegenzuglage zwischen 4 Gew.-% und 12 Gew.-% der Gesamtmasse der Trägerplatte ausmachen kann:
- zwischen 20 Gew.-% und 45 Gew.-% eines isotaktischen Polypropylen mit einer Kristallinität X_{C} ≤ 40 % und ≥ 10%, vorzugsweise als ein Rezyklat. Vorzugsweise liegt das Polypropylen dabei als Homopolymer vor;
- zwischen 30 Gew.-% und 60 Gew.-% eines Materials mit der Zusammensetzung der Kernlage;
- ≥10 Gew.-% bis ≤30 Gew.-% eines ataktisch und amorph Polypropylen mit einem EPDM-Anteil von ≥20 Gew.-% bis ≤40 Gew.-%;
- optional primäre und sekundäre Stabilisierungsmittel und Antioxidationsmittel wie beispielsweise hindered Phenols ausgewählt aus der Gruppe bestehend aus Butylierte Hydroxytoluole (BHT), butylierte Hydroxyanisole (BHA), Tetrakis(methylene(3,5-di-tert-butyl-4-hydroxyphenyl)]methan oder Octadecyl-3-(3,5-di-tert-butyl-4-hydroxyphenyl) acrylate, Phosphiten und Thioethern.

Eine solche Trägerplatte weist einen Biege-E-Modul von zwischen ≤ 400 MPa und 1500 MPa, insbesondere zwischen ≤ 600 MPa und 1200 MPa, wie beispielsweise 800 MPa auf.

## Patentansprüche

1. Trägerplatte für ein Dekorpaneel, wobei die Trägerplatte eine Kernlage aufweist, wobei die Kernlage aufweist
≥55 Gew.-% bis ≤70 Gew.-%, vorzugsweise ≥57 Gew.-% bis ≤65 Gew.-%, insbesondere 60 % mindestens eines mineralischen Füllstoffs ausgewählt aus der Gruppe bestehend aus Steinmehl, Schwerspat, BaSO₄, CaCO₃, CaSO₄, Wollastonit, CaSiO₃, Schichtsilikaten;
≥4 Gew.-% bis ≤ 20 Gew.-%, insbesondere 15 Gew.-% oder 5 Gew.-% eines Polypropylen-Copolymer mit einer Kristallinität X_{C} ≤ 40% und ≥ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Copolymers ist;
≥10 Gew.-% bis ≤ 30 Gew.-%, insbesondere 15 Gew.- % oder 25 Gew.-% eines Polypropylen-Elastomeren mit einer Kristallinität X_{C} ≤ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Polypropylen-Elastomeren ist;
≥5 Gew.-% bis ≤ 12 Gew.-%, insbesondere 8 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew,-%, sowie
als Haftvermittler zwischen ≥0,5 Gew.-% bis ≤ 3,5 Gew.-%, insbesondere 2 Gew.-% eines Maleinsäureanhydrid gegrafteten Polypropylen (PP-g-MAH).

2. Trägerplatte gemäß Anspruch 1, wobei die Trägerplatte eine Dicke in einem Bereich von ≥1,5 mm Gew.-% bis ≤ 5,5 mm, insbesondere 2 mm oder 4 mm aufweist.

3. Trägerplatte gemäß einem der vorhergehenden Ansprüche, wobei die Trägerplatte einen Biege-E-Modul zwischen ≤ 400 MPa und 2000 MPa, vorzugsweise zwischen ≤ 600 MPa und 1800 MPa, insbesondere zwischen ≤ 800 MPa und 1500 MPa aufweist.

4. Trägerplatte gemäß einem der vorhergehenden Ansprüche, wobei diese eine Gegenzuglage aufweist, wobei die Gegenzuglage wenigstens aufweist,
zwischen ≥28 Gew.-% bis ≤ 35 Gew.-%, insbesondere 32 % eines isotaktischen Polypropylens mit einer Kristallinität X_{C} ≤ 40 % und ≥ 10% aufweist, wobei das isotaktische Polypropylen vorzugsweise ein rezykliertes Polypropylen-Homopolymer ist; sowie
zwischen ≥40 Gew.-% bis ≤ 55 Gew.-%, insbesondere 48 Gew.-% eines Kunststoffmaterial aufweisend
≥55 Gew.-% bis ≤70 Gew.-%, vorzugsweise ≥57 Gew.-% bis ≤65 Gew.-%, insbesondere 60 % mindestens eines mineralischen Füllstoffs ausgewählt aus der Gruppe bestehend aus Steinmehl, Schwerspat, BaSO₄, CaCO₃, CaSO₄, Wollastonit, CaSiO₃, Schichtsilikaten;
≥4 Gew.-% bis ≤ 20 Gew.-%, insbesondere 15 Gew.-% oder 5 Gew.-% eines Polypropylen-Copolymer mit einer mit einer Kristallinität X_{C} ≤ 40 % und ≥ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Copolymers ist;
≥10 Gew.-% bis ≤ 30 Gew.-%, insbesondere 15 Gew.- % oder 25 Gew.-% eines Polypropylen-Elastomeren mit einer Kristallinität X_{C} ≤ 10%, gegeben als X_{C} = Δ*H*/Δ*H*₀ x 100%, Δ*H* die Schmelzenthalpie des Copolymers ist und Δ*H*₀ wobei die approximierte Schmelzenthalpie des hundertprozentig kristallinen Polypropylen-Elastomeren ist;
≥5 Gew.-% bis ≤ 12 Gew.-%, insbesondere 8 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew,-%, sowie
als Haftvermittler zwischen ≥0,5 Gew.-% bis ≤ 3,5 Gew.-%, insbesondere 2 Gew.-% eines Maleinsäureanhydrid gegrafteten Polypropylen (PP-g-MAH); und wobei die Gegenzuglage zusätzlich weiter aufweist ≥15 Gew.-% bis ≤ 25 Gew.-%, insbesondere 20 Gew.-% eines Ethylen-Propylen-Dien-Kautschuk modifizierten Polypropylen mit einem Ethylen-Propylen-Dien-Kautschuk-Anteil zwischen ≥25 Gew.-% bis ≤ 35 Gew.-%, insbesondere 30 Gew.-%.

5. Trägerplatte gemäß Anspruch 4, wobei der Füllstoffanteil in der Gegenzuglage in einem Bereich zwischen ≥26 Gew.-% bis ≤ 32 Gew.-%, insbesondere 28 Gew.-% beträgt, bezogen auf die Materialzusammensetzung der Gegenzuglage.

6. Trägerplatte gemäß Anspruch 4 oder 5, wobei die Gegenzuglage im Bezug auf die gesamte Trägerplatte einen Anteil von zwischen ≥5 % bis ≤ 10 % der Gesamtdicke der Trägerplatte ausmacht.

7. Trägerplatte gemäß einem der vorhergehenden Ansprüche, wobei die Trägerplatte eine Druckempfangsschicht aufweist, insbesondere auf der einer Gegenzuglage gegenüberliegenden Seite der Trägerplatte, wobei die Druckempfangsschicht

8. Dekorpaneel, aufweisend eine Trägerplatte nach einem der Ansprüche 1 bis 7, ferner aufweisen eine zumindest auf Teilbereichen der Trägerplatte aufgebrachte Dekorschicht aufweist, wobei die Dekorschicht direkt auf der Trägerplatte oder auf einer zwischen der Trägerplatte und der Dekorschicht aufgebrachten Zwischenlage aufgebracht ist, sowie eine oberhalb der Dekorschicht aufgebrachte Verschleißschutzschicht, wobei die Verschleißschutzschicht zwischen ≥ 1 bis ≤ 10 Einzelschichten aufweist.

9. Verfahren zur Herstellung einer Trägerplatte gemäß einem der Ansprüche 1 bis 7, aufweisend die Verfahrensschritte:
a) Bereitstellen einer Polymermasse für eine Kernlage sowie einer Polymermasse für eine Gegenzuglage;
b) Schmelzen der Polymermassen
c) Extrudieren der geschmolzenen Polymermassen, wobei insbesondere jede Polymermasse mit einem separaten Extruder extrudiert wird, wobei die geschmolzenen Polymermassen schichtweise übereinandergelegt werden,
d) Austreiben der schichtweise übereinandergelegten geschmolzenen Polymermassen durch eine Düse;
e) Kalibrieren der schichtweise übereinandergelegten geschmolzenen Polymermassen unter Ausbildung eines plattenförmigen Trägers aufweisend zumindest eine Trägerschicht umfassend die Polymermasse der Kernlage und die Polymermasse des Gegenzuglage, wobei während der Kalibrierung die Polymermassen über eine Kalibiereinrichtung gekühlt werden, wobei die Kalibiereinrichtung zumindest eine erste Kalibrierwalze und einer zweite Kalibrierwalze aufweist und die übereinandergelegten Polymermassen durch einen zwischen der ersten Kalibierwalze und der zweiten Kalibierwalze ausgebildeten Kalibierspalt geführt wird, wobei die erste Kalibierwalze eine Temperatur T1 aufweist und die zweite Kalibrierwalze eine Temperatur T2 aufweist und wobei Δ_{T1/T2} in einem Bereich zwischen ≥ 20K und ≤ 100K, vorzugsweise ≥ 25K und ≤ 70K, insbesondere 50K beträgt.

10. Verfahren gemäß Anspruch 9, wobei in Schritt a) eine weitere Polymermasse zur Ausbildung einer Druckempfangsschicht bereitgestellt wird, welche gemeinsam mit der Polymermasse der Kernlage und der Polymermasse der Gegenzuglage extrudiert wird, so dass sich ein plattenförmiger Träger mit dem Schichtaufbau Druckemfangsschicht/Kernlage/Gegenzuglage ausbildet.
